# EUROPEAN PATENT SPECIFICATION

(11) **EP 2 419 675 B1**
(45) Date of publication and mention of the grant of the patent: **13.02.2013**
(21) Application number: 10798646.5
(22) Date of filing: 18.11.2010
(51) Int. Cl.: F21V 31/00, F21W 101/10

(54) **A MOTOR VEHICLE LIGHT WITH A SEALING RING BETWEEN A CASING AND ADJUSTABLE REFLECTOR**
MOTORFAHRZEUGBELEUCHTUNG MIT EINEM DICHTRING ZWISCHEN EINEM GEHÄUSE UND EINEM EINSTELLBAREN REFLEKTOR
FEU DE VÉHICULE À MOTEUR COMPORTANT UN ANNEAU D'ÉTANCHÉITÉ ENTRE UN BOÎTIER ET UN RÉFLECTEUR RÉGLABLE

(30) Priority: 24.11.2009 SI 200900367
(43) Date of publication of application: 22.02.2012
(73) Proprietor: Hella Saturnus Slovenija, Proizvodnja svetlobne opreme za motorna in druga vozila, d.o.o., 1000 Ljubljana (SI)
(72) Inventor: JUREJEVCIC, Tomaz, 1000 Ljubljana (SI); HRIBAR, Marjan, 1234 Menges (SI)
(74) Representative: Borstar, Dusan
(86) International application number: PCT/SI2010/000066
(87) International publication number: WO 2011/065924

(56) References cited:
- EP-A1- 0 129 922
- EP-A2- 0 578 552
- EP-A2- 0 745 511
- DE-A1-102008 002 325
- DE-U1- 8 220 282
- SI-A- 21 197
- US-A- 6 116 755

## Description

The present invention refers to a motor vehicle light with a sealing ring between a casing and adjustable reflector according to claim 1 and a motor vehicle light sealing according to the claim 5. According to the International Patent Classification, such inventions belong to the field of transporting, namely to vehicles and in particular to arrangement of signaling or lightning devices and protection of illuminating devices against moisture and impurities. On the other hand, such invention may also refer to mechanical engineering, namely to sealings between relatively-stationary surfaces, which comprise at least one flexible sleeve.

The purpose of the invention is to improve engagement of a sealing sleeve with each sealed surface of the vehicle light in order to increase the reliability of sealing by taking into consideration all practical requirements and by means of simple measures.

A motor vehicle light with a sealing mounted between a casing and a reflector, is described in SI21197. In this, said sleeve is formed uniformly with said static sealing portion, so that - when observed in a diametrical cross-section - said sleeve is derived from said stationary sealing section like an arm of a letter U or V, by which the thickness of the sleeve is gradually decreasing in a direction from said portion towards its free end portion, which then allows each desired deformability and flexibility of said sleeve i.e. said dynamic sealing portion and herewith of a complete sealing. Moreover, the outwardly facing abutment surface of such sleeve is deflected outwardly, which leads to uniform abutment towards each corresponding opposite surface.

Consequently, such sealing sleeve enables achieving of each desired sealing function between a the casing and the reflector even in such cases, when the position of the reflector has been changed at a relatively small angle, which in the practice normally occurs by adjusting of the position of the reflector due to adjusting appropriate optical conditions of the light.

A step-like abutment edge is foreseen on the outer surface of the reflector for the purposes of placing and positioning of the sealing. The inner abutment surface of the stationary sealing portion, which is facing towards the outer surface of the reflector, is smooth and uniform. Prior to inserting the reflector into the casing, said sealing is mounted onto reflector by means of sliding thereof in the axial direction of the reflector. By inserting the reflector together with the sealing already mounted thereon, said stationary sealing portion is rest on said step-like abutment edge on the outer surface of the reflector, while appropriately deflected sleeve is sliding along the inner surface of the casing, by which the friction between the sleeve and corresponding contact surface results in tensioning the sleeve, by which also the stationary sealing portion is bent in a direction away from the outer surface of the reflector, to which the sealing abuts. Upon inserting the reflector into the casing, the sealing remains deformed, but nevertheless a desired sealing function is herewith ensured between the casing and the reflector. It should however be born in mind that all the time the sealing has a tendency to release back into its relaxed original form. This naturally means that the shape of such deformed stationary sealing portion is changing during the time, which normally has certain influence to the pressure of abutment the sleeve towards the inner surface of the casing. Displacement of sealing in the axial direction of the reflector is limited in one direction only, so that during the time and in particular by adjusting each desired position of the reflector relatively to the casing, the position of the stationary sealing portion on the surface of the reflector may generally also be changed. Both these circumstances may however lead to deficiencies in performing sealing function between the casing and the reflector in a motor vehicle light.

Still further, a sealing is described in US 3,909,019, which also comprises a stationary sealing portion as well as a flexible portion having a convex abutment surface, wherein the transition area between said portion is essentially weak, by which said flexible portion together with its convex abutment surface may easily be pivoted relatively to said stationary sealing portion. The stationary sealing portion is placed on the inner surface of the female sealed part, while the flexible portion is intended for abutment on the outer surface of the male sealed part, which is inserted into said female part providing that appropriate gap is available there-between. In this, said stationary portion is insertable into appropriate groove on the female sealing surface, and the width of said groove needs to be smaller than the width of said portion. Consequently, the stationary portion is appropriately deflected, by which a desired pressure towards the outer surface of the sealed part is then assured. However, due to the required presence of said groove, which must be relatively wide and deep, and by taking into consideration all technical requirements related to motor vehicle lights, the use of such sealing in the field of motor vehicle lights and in the context of the present invention seems not to be feasible at all.

The present invention refers to a motor vehicle light with a sealing ring between a casing and adjustable reflector and a motor vehicle light sealing. For the purposes of cooperating with the sealing, said reflector is furnished with a smooth and continued circumferential outer sealing surface and the casing is furnished with a smooth and continued circumferential inner sealing surface. The sealing is uniformly conceived and consists of rubber or similar flexible material on the basis of polymers and at the one hand comprises at least approximately tubular stationary sealing portion, which is adapted to cooperate with at least approximately cylindrical and at least approximately coaxially with an optical axis of the reflector extending smooth outer sealing surface of each available reflector, and on the other hand a dynamic sealing portion, namely a sleeve, which is furnished with a slightly convex outer sealing surface and which is adapted to cooperate with at least approximately cylindrical inner surface of each available casing and protrudes at least approximately in the radial direction outwardly from said stationary sealing portion.

In accordance with the invention, an essentially as a circumferentially with respect to the sealing extending and axially with respect to the stationary sealing portion directcd and towards the outer surface of the dynamic sealing portion opened recess formed weak portion is foreseen on the one end portion of the stationary sealing portion closely to and apart from the dynamic sealing portion. At the same time, said stationary sealing portion of the sealing is secured against displacement in one or another direction along the optical axis of the reflector.

In a preferred embodiment of the invention, the inner sealing surface of the stationary sealing portion of the sealing comprises a circumferential groove, which is arranged on the inner sealing surface on the sealing on the end portion located at a greater distance apart from the dynamic sealing portion, and which is adapted to cooperate with a circumferential rib protruding outwardly from the abutment surface of the seat of the motor vehicle light reflector. Besides, the stationary sealing portion comprises a radially inwards protruding circumferential rib, which is arranged on the end portion, which is located at a greater distance apart from the dynamic sealing area and adjacent to the groove on the inner sealing surface. Moreover, the thickness of the dynamic sealing portion is preferably decreasing proportionally with the distance apart from the stationary sealing portion of the sealing.

The invention will be described in more detail on the basis of an embodiment, which is shown in the attached drawing, wherein
- Fig. 1: is a front view of a motor vehicle light together with an adjustable reflector, which is inserted therein, and also with a sealing ring inserted there-between;
- Fig. 2: is a cross-section along the plane A - A according to Fig. 1;
- Fig. 3: is a detail B according to Fig. 2; and
- Fig. 4: is a diametrical cross-section of undeformed sealing.

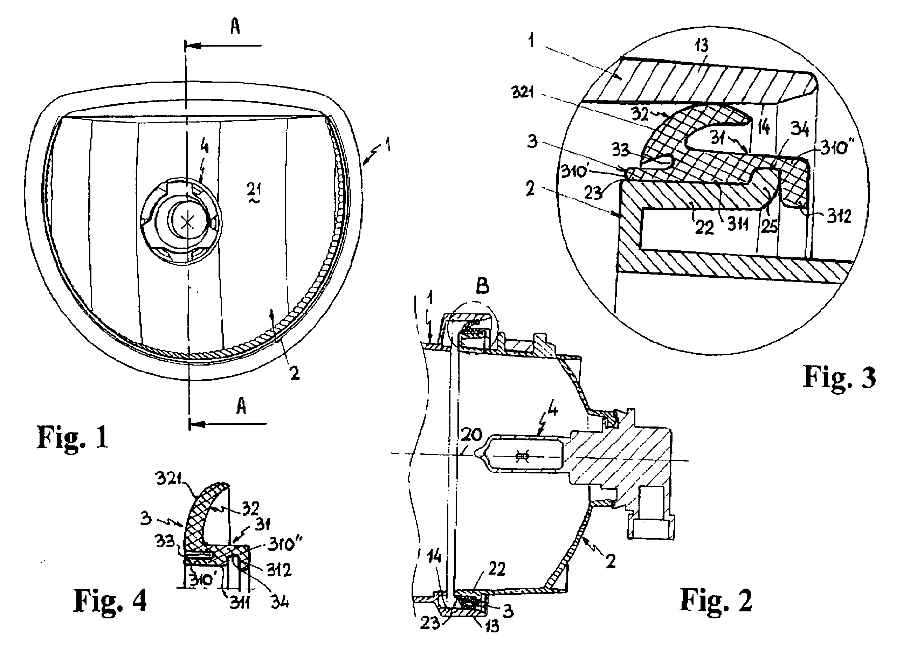

A motor vehicle light is shown in Fig. 1, which comprises at least a casing 1 and a reflector 2, which is adjustable in various positions with respect to said casing 1, wherein a seal 3 in accordance with the present invention is inserted between said reflector 2 and said casing 1.

The casing 1 is closed on its front end portion 11, when observed in usual driving direction during the use thereof, with a transparent front wall 10, whilst at appropriate distance apart from said front end portion 11, namely in the shown embodiment in the area of the rear end portion 12, said casing 1 comprises a seat 13 intended for inserting the reflector 2 and being furnished with a smooth circumferential surface 14 adapted to receive a sealing 3.

The reflector 2 is equipped with appropriate reflecting surface 21 and adapted to receive an appropriate light source 4, and is moreover in the area of cooperation with said casing 1 in its circumferential area furnished with a seat 22 having a smooth abutment surface 23, which is adapted to receive the sealing 3. Moreover, said seat 22 is furnished with at least one outwardly protruding circumferential rib 25, which is adapted to cooperate with said sealing 3 in the sense of preventing the sealing 3 from being displaced in the axial direction i.e. at least approximately along each optical axis 20 of the reflector 2.

In the context of assembly of the casing 1 and the reflector 2 as such, the casing 1 with its inner abutment surface 14 on the seat 13 represents a female part, and the reflector 2 with its abutment surface 23 represents the male part of such assembly, wherein generally each disposable gap between such male part and female part is then filled with a sealing 3, so that appropriate sealing function is assured between the casing 1 and the reflector 2 regardless to possible displacements due do adjusting each desired position of said reflector 2.

The casing 1 is mounted in each disposable location within a motor vehicle, and the position thereof is generally fixed. On the contrary, the reflector 2 is mounted within the casing 1 with the possibility of adjusting each desired position thereof, namely by inclination of its optical axis 20 with respect to the longitudinal axis of the casing 1 at each desired angle, which from quite practical point of view normally means inclination for several degrees. However, despite to such adjusting of position of the reflector 2, and moreover also regardless to possible temperature variations and co-related pressure variations, the sealing function between the casing 1 and the reflector 2 must be permanently established, since on the contrary the question about functionality of such light might arise.

Said sealing 3 is a so-called sleeve sealing, which is in Figs. 2 and 3 shown in its inserted state during the use, and in Fig. 4 in its undeformed state prior to inserting.
The sealing 3 is uniformly conceived and consists of a flexible material, in particular of rubber or anyone of known thermoplastic materials from the group of polymers. In this, said sealing 3 comprises an essentially tubular stationary sealing portion 31, which is furnished with an inwardly facing abutment surface 311, which is adapted to cooperate with the outer surface 23 of the reflector 2, as well as a dynamic sealing portion 32 in the form of sleeve, which is slightly deflected and is protruding at least approximately in the radial direction from said stationary sealing portion 31 at one axial end portion 310' thereof. Said dynamic sealing portion 32 comprises a convex outwardly facing sealing surface 321, which is adapted to cooperate with the inner surface 14 of the motor vehicle light casing 1.

In accordance with the invention, said sealing 3 is characterized by a weak portion 33 in form of a recess, which is opened outwardly in a direction towards the sealing surface 321 of the dynamic sealing portion 32 and is arranged on one axial end portion 310' of a stationary sealing portion 31 closely to the dynamic sealing portion 32.

A further characteristic of the sealing 3 according to the invention is a groove 34, which is foreseen o the inner abutment surface 311 of the stationary sealing portion 31 and is adapted to cooperate with radially outwards protruding circumferential rib 25, which is available on the seat 22 of the reflector 2. As mentioned, said weak portion 33 is located on the first end portion 310' closely to the dynamic sealing portion 32, while the groove 34 is located on the oppositely located second end portion 310" of the stationary sealing portion 31 of the sealing 3. Said stationary scaling portion 31 preferably comprises an inwardly protruding circumferential rib 312, which is located on the second end portion 310" thereof.

Prior to inserting the reflector 2 into the casing 1, the sealing 3 is placed onto the outer surface 23 of the corresponding seat 22 of the reflector 2, so that the inner abutment surface 311 of the stationary sealing portion 31 of the sealing 3 abuts the outer surface 23 of the reflector 2, and that simultaneously radially outwards protruding circumferential rib 23 on the said seat 22 of the reflector 2 protrudes into the groove 34 on the sealing 3. Consequently, the sealing 3 is secured against any displacement in both directions along the optical axis 20 of the reflector 2, wherein the shape of the sealing 3 in such a state still corresponds to original undeformed shape of the sealing 3 according to Fig. 4. Upon that, the reflector 2 is inserted into the casing 1 together with the belonging sealing 3 placed thereon, while during insertion the dynamic sealing portion 32 of the sealing 3 is then deformed, by which the sealing 3 is deformed into its shape according to Figs. 2 and 3. However, thanks to the presence of said weak portion 33, exclusively the dynamic sealing portion 32 is deflected, while the stationary scaling portion 31 remains completely undeformed and the inner abutment surface 311 permanently and completely abuts the outward surface 23 of the seat 22 of the reflector 2. Although subsequently either by adjusting each desired position of the reflector 2 or even later during the long term use of the light said sealing 3 shows the tendency of releasing back to its original shape according to Fig. 4, by which the position of the dynamic sealing portion 32 may generally even be changed; but despite to that a perfect and continued contact between the sealing 3 and the inner sealing surface 14 on the seat 13 of the casing 1 is assured along the complete circumference thanks to the convex shape of the outer sealing surface 321 of said dynamic sealing portion 32.

Due to said concept of the sealing 3 also the friction between the sealing 3 and the casing 1 during insertion of the reflector 2 together with the sealing 3 into the casing 1 is then essentially lowcr. Pressure differences between the interior and the exterior of the casing 1, which normally occur due to temperature variations during the use of each light, result in increasing of pressure towards the sealing 3 in one or in another direction, which normally leads to still intensively pressing the sealing 3 towards the reflector 2 and the casing 1, so that the sealing function between the casing 1 and the reflector 2 is then maintained in an extremely reliable manner thanks to establishing a perfect contact of the sealing 3 both towards the reflector 2 and towards the casing 2.

## Claims

1. Motor vehicle light with a sealing ring between a casing (1) and adjustable reflector (2), said light comprising
- a casing (1), which is closed on its front end portion (11), when observed in usual driving direction during the use thereof, with a transparent front wall (10), while in the area of its rear portion (12) said casing (1) comprises a seat (13), which is furnished with a smooth, continued and at least approximately cylindrical inner circumferential sealing surface (14);
- a reflector (2) which is mounted within said casing (1) with the possibility of adjusting each desired position thereof, namely by inclination of its optical axis (20) with respect to the longitudinal axis of said casing (1), said reflector (2) is equipped with appropriate reflecting surface (21) and adapted to receive appropriate light source (4) and is moreover in the area of cooperation with said casing (1) in its circumferential area furnished with a seat (22) having a smooth outer abutment surface (23) which is essentially cylindrical and extends coaxially with respect to the optical axis (20) of the reflector (2); and
- a sealing (3), namely a sleeve sealing, which is intended for filling a gap between said casing (1) and said reflector (2), namely between said inner surface (14) of the casing (1) and the outer surface (23) of the reflector (2), said sealing (3) is uniformly conceived and consists of rubber or similar flexible material on the basis of polymers and comprises at least approximately tubular stationary sealing portion (31), which is adapted to cooperate with said outer sealing surface (23) of the reflector (2), as well as a dynamic sealing portion (32), which is furnished with a slightly convex outer scaling surface (321) and which is adapted to cooperate with said cylindrical inner surface (14) of each available casing (1) and protrudes at least approximately in the radial direction outwardly from said stationary sealing portion (31),
**characterized in that**
said sealing (3) is furnished with a weak portion (33) in the form of a recess, which is arranged on the closely to the dynamic sealing portion (32) located end portion (310') of the stationary sealing portion (31) and apart from the dynamic sealing portion (32), wherein said weak portion (33) extends circumferentially with respect to the sealing (3) and axially with respect to the stationary sealing portion (31) and is opened towards the dynamic sealing portion (32),
**and in that** said stationary sealing portion (31) of the sealing (3) is secured against displacement in one or another direction along the optical axis (20) of the reflector (2).

2. Motor vehicle light according to Claim 1, **characterized in that** a radially outwards protruding circumferential rib (25) is available on the seat (22) of the reflector (2) **and in that** the sealing (3) is furnished with a circumferential groove (34), which is located on the inner sealing surface (311) of the stationary sealing portion (31), namely on that end portion (310") of the stationary sealing portion (31), which is located at a greater distance apart from the dynamic sealing portion (32), wherein said groove (34) is adapted to cooperate with said circumferential rib (25) on the reflector (2).

3. Motor vehicle light according to Claim 2, **characterized in that** the stationary sealing portion (31) comprises a radially inwards protruding circumferential rib (312), which is arranged on the end portion (310") located at a greater distance apart from the dynamic sealing portion (32) and adjacent to the groove (34) on the inner sealing surface (311).

4. Motor vehicle light according to anyone of the preceding Claims, **characterized in that** the thickness of the dynamic sealing portion (32) is decreasing proportionally with the distance apart from the stationary sealing portion (31) of the sealing (3).

5. Motor vehicle light sealing (3), namely a sleeve sealing adapted for filling a gap between a casing (1) and a reflector (2) in each motor vehicle light, namely a gap between at least approximately cylindrical outer sealing surface (23) of a reflector (2)
when inserted into said casing (1) with the possibility of adjusting its position relative to said casing (1), and a cylindrical inner sealing surface (14) of each available casing (1), wherein said sealing (3) is uniformly conceived and consists of rubber or similar flexible material on the basis of polymers and comprises at least approximately tubular stationary sealing portion (31), which is adapted to cooperate with said outer sealing surface (23) of the reflector (2), as well as a dynamic sealing portion (32), which is furnished with a slightly convex outer sealing surface (321) and which is adapted to cooperate with said cylindrical inner surface (14) of each available casing (1) and protrudes at least approximately in the radial direction outwardly from said stationary sealing portion (31),
**characterized in that**
said sealing (3) is furnished with a weak portion (33) in the form of a recess, which is arranged on the closely to the dynamic sealing portion (32) located end portion (310') of the stationary sealing portion (31) and apart from the dynamic sealing portion (32),
wherein said weak portion (33) extends circumferentially with respect to the sealing (3) and axially with respect to the stationary sealing portion (31) and is opened towards the dynamic sealing portion (32),
**and in that** said the sealing (3) is further furnished with a circumferential groove (34), which is foreseen for securing the sealing (3) against displacement in both direction along the reflector (2) and which is located on the inner sealing surface (311) of the stationary sealing portion (31), namely on that end portion (310") of the stationary sealing portion (31), which is located at a greater distance apart from the dynamic sealing portion (32), wherein said groove (34) is adapted to cooperate with said circumferential rib (25) on the reflector (2).

6. Motor vehicle light sealing according to Claim 5, **characterized in that** said stationary sealing portion (31) comprises a radially inwards protruding circumferential rib (312), which is arranged on the end portion (310") located at a greater distance apart from the dynamic sealing portion (32) and adjacent to the groove (34) on the inner sealing surface (311).

7. Motor vehicle light sealing according to Claim 5 or 6, **characterized in that** the thickness of the dynamic sealing portion (32) is decreasing proportionally with the distance apart from the stationary sealing portion (31) of the sealing (3).

## Patentansprüche

1. Kraftfahrzeugbeleuchtung mit einem Dichtring zwischen einem Gehäuse (1) und einem einstellbaren Reflektor (2), wobei die Beleuchtung aufweist:
- ein Gehäuse (1), das an seinem vorderen Endabschnitt (11), betrachtet bei dessen Verwendung in üblicher Fahrtrichtung, durch eine transparente Stirnwand (10) verschlossen ist, während das Gehäuse (1) im Bereich seines hinteren Abschnitts (12) einen Sitz (13) aufweist, der mit einer glatten, durchgehenden und zumindest annähernd zylindrischen inneren Umfangsdichtfläche (14) versehen ist;
- einen Reflektor (2), der innerhalb des Gehäuses (1) angebracht ist und dabei die Möglichkeit bietet, ihn in jede gewünschte Position einzustellen, und zwar durch Neigung seiner optischen Achse (20) in Bezug auf die Längsachse des Gehäuses (1), wobei der Reflektor (2) mit einer passenden Reflexionsfläche (21) ausgestattet und dazu geeignet ist, eine passende Lichtquelle (4) aufzunehmen, und wobei er des Weiteren im Bereich der Zusammenwirkung mit dem Gehäuse (1) in seinem Umfangsbereich mit einem Sitz (22) mit einer glatten äußeren Anlagefläche (23) versehen ist, die im Wesentlichen zylindrisch ist und sich koaxial in Bezug auf die optische Achse (20) des Reflektors (2) erstreckt; und
- eine Dichtung (3), und zwar eine Hülsendichtung, die zum Füllen einer Lücke zwischen dem Gehäuse (1) und dem Reflektor (2) vorgesehen ist, und zwar zwischen der Innenfläche (14) des Gehäuses (1) und der Außenfläche (23) des Reflektors (2), wobei die Dichtung (3) einheitlich ausgeführt ist und aus Gummi oder einem ähnlichen flexiblen Material auf Basis von Polymeren besteht und einen zumindest annähernd rohrförmigen feststehenden Dichtungsabschnitt (31), der dazu geeignet ist, mit der äußeren Dichtfläche (23) des Reflektors (2) zusammenzuwirken, sowie einen dynamischen Dichtungsabschnitt (32) aufweist, der mit einer leicht konvexen äußeren Dichtfläche (321) versehen und dazu geeignet ist, mit der zylindrischen Innenfläche (14) jedes verfügbaren Gehäuses (1) zusammenzuwirken und zumindest annähernd in radialer Richtung nach außen von dem feststehenden Dichtungsabschnitt (31) vorsteht,
**dadurch gekennzeichnet, dass**
die Dichtung (3) mit einem schwachen Abschnitt (33) in Form einer Ausnehmung versehen ist, der an dem nahe dem dynamischen Dichtungsabschnitt (32) gelegenen Endabschnitt (310') des feststehenden Dichtungsabschnitts (31) und beabstandet zu dem dynamischen Dichtungsabschnitt (32) angeordnet ist, wobei sich der schwache Abschnitt (33) in Umfangsrichtung in Bezug auf die Dichtung (3) und axial in Bezug auf den feststehenden Dichtungsabschnitt (31) erstreckt und sich zum dynamischen Dichtungsabschnitt (32) hin öffnet, und dass der feststehende Dichtungsabschnitt (31) der Dichtung (3) gegen Verschiebung in die eine oder andere Richtung entlang der optischen Achse (20) des Reflektors (2) gesichert ist.

2. Kraftfahrzeugbeleuchtung nach Anspruch 1, **dadurch gekennzeichnet, dass** eine radial nach außen vorstehende Umfangsrippe (25) auf dem Sitz (22) des Reflektors (2) vorhanden ist und dass die Dichtung (3) mit einer Umfangsnut (34) versehen ist, die sich auf der inneren Dichtfläche (311) des feststehenden Dichtungsabschnitts (31), und zwar auf dem Endabschnitt (310") des feststehenden Dichtungsabschnitts (31) befindet, der sich in einem größeren Abstand von dem dynamischen Dichtungsabschnitt (32) befindet, wobei die Nut (34) dazu geeignet ist, mit der Umfangsrippe (25) auf dem Reflektor (2) zusammenzuwirken.

3. Kraftfahrzeugbeleuchtung nach Anspruch 2, **dadurch gekennzeichnet, dass** der feststehende Dichtungsabschnitt (31) eine radial nach innen vorstehende Umfangsrippe (312) aufweist, die an dem Endabschnitt (310") angeordnet ist, der sich in einem größeren Abstand von dem dynamischen Dichtungsabschnitt (32) und angrenzend an die Nut (34) auf der inneren Dichtfläche (311) befindet.

4. Kraftfahrzeugbeleuchtung nach einem der vorhergehenden Ansprüche, **dadurch gekennzeichnet, dass** die Dicke des dynamischen Dichtungsabschnitts (32) proportional mit dem Abstand von dem feststehenden Dichtungsabschnitt (31) der Dichtung (3) abnimmt.

5. Kraftfahrzeugbeleuchtungsdichtung (3), und zwar eine Hülsendichtung, die dazu geeignet ist, in jeder Kraftfahrzeugbeleuchtung eine Lücke zwischen einem Gehäuse (1) und einem Reflektor (2) zu füllen, und zwar eine Lücke zwischen einer zumindest annähernd zylindrischen äußeren Dichtfläche (23) eines Reflektors (2), wenn dieser in das Gehäuse (1) eingefügt ist, wobei die Möglichkeit besteht, seine Position in Bezug auf das Gehäuse (1) zu verstellen, und einer zylindrischen inneren Dichtfläche (14) jedes verfügbaren Gehäuses (1), wobei die Dichtung (3) einheitlich ausgeführt ist und aus Gummi oder einem ähnlichen flexiblen Material auf Basis von Polymeren besteht und einen zumindest annähernd rohrförmigen feststehenden Dichtungsabschnitt (31), der dazu geeignet ist, mit der äußeren Dichtfläche (23) des Reflektors (2) zusammenzuwirken, sowie einen dynamischen Dichtungsabschnitt (32) aufweist, der mit einer leicht konvexen äußeren Dichtfläche (321) versehen und dazu geeignet ist, mit der zylindrischen Innenfläche (14) jedes verfügbaren Gehäuses (1) zusammenzuwirken, und der zumindest annähernd in radialer Richtung nach außen von dem feststehenden Dichtungsabschnitt (31) vorsteht,
**dadurch gekennzeichnet, dass**
die Dichtung (3) mit einem schwachen Abschnitt (33) in Form einer Ausnehmung versehen ist, die an dem nahe dem dynamischen Dichtungsabschnitt (32) gelegenen Endabschnitt (310') des feststehenden Dichtungsabschnitts (31) und beabstandet zu dem dynamischen Dichtungsabschnitt (32) gelegen ist,
wobei sich der schwache Abschnitt (33) in Umfangsrichtung in Bezug auf die Dichtung (3) und axial in Bezug auf den feststehenden Dichtungsabschnitt (31) erstreckt und sich zum dynamischen Dichtungsabschnitt (32) hin öffnet,
und dass die Dichtung (3) des Weiteren mit einer Umfangsnut (34) versehen ist, die zum Sichern der Dichtung (3) gegen eine Verschiebung in beide Richtungen entlang des Reflektors (2) vorgesehen ist und sich auf der inneren Dichtfläche (311) des feststehenden Dichtungsabschnitts (31) befindet, und zwar auf dem Endabschnitt (310") des feststehenden Dichtungsabschnitts (31), der sich in einem größeren Abstand von dem dynamischen Dichtungsabschnitt (32) befindet, wobei die Nut (34) dazu geeignet ist, mit der Umfangsrippe (25) auf dem Reflektor (2) zusammenzuwirken.

6. Kraftfahrzeugbeleuchtung nach Anspruch 5, **dadurch gekennzeichnet, dass** der feststehende Dichtungsabschnitt (31) eine radial nach innen vorstehende Umfangsrippe (312) aufweist, die an dem Endabschnitt (310") angeordnet ist, der sich in einem größeren Abstand von dem dynamischen Dichtungsabschnitt (32) und angrenzend an die Nut (34) auf der inneren Dichtfläche (311) befindet.

7. Kraftfahrzeugbeleuchtungsdichtung nach Anspruch 5 oder 6, **dadurch gekennzeichnet, dass** die Dicke des dynamischen Dichtungsabschnitts (32) proportional mit dem Abstand zu dem feststehenden Dichtungsabschnitt (31) der Dichtung (3) abnimmt.

## Revendications

1. Phare de véhicule à moteur avec un anneau d'étanchéité entre un boîtier (1) et un réflecteur ajustable (2), ledit phare comprenant
- un boîtier (1), qui est fermé sur sa partie d'extrémité avant (11), lorsqu'on l'observe dans la direction de conduite habituelle pendant son utilisation, avec une paroi avant transparente (10), tandis que dans la zone de sa partie arrière (12) ledit boîtier (1) comprend un logement (13), qui est pourvu d'une surface d'étanchéité circonférentielle interne lisse, continue et au moins partiellement cylindrique (14) ;
- un réflecteur (2) qui est monté à l'intérieur dudit boîtier (1) avec la possibilité d'ajuster chaque partie souhaitée de celui-ci, à savoir par inclinaison de son axe optique (20) par rapport à l'axe longitudinal dudit boîtier (1), ledit réflecteur (2) est équipé d'une surface réfléchissante appropriée (21) et adapté pour recevoir une source de lumière appropriée (4) et est en outre pourvu dans la zone de coopération avec ledit boîtier (1) dans sa zone circonférentielle du logement (22) ayant une surface de butée externe lisse (23) qui est essentiellement cylindrique et s'étend coaxialement par rapport à l'axe optique (20) du réflecteur (2) ; et
- un joint (3), à savoir un joint à manchon, qui est destiné à combler un interstice entre ledit boîtier (1) et ledit réflecteur (2), à savoir entre ladite surface interne (14) du boîtier (1) et la surface externe (23) du réflecteur (2), ledit joint (3) est conçu de manière uniforme et se compose de caoutchouc ou d'un matériau souple similaire à base de polymères et comprend au moins une partie d'étanchéité fixe approximativement tubulaire (31), qui est adaptée pour coopérer avec ladite surface d'étanchéité externe (23) du réflecteur (2), ainsi qu'une partie d'étanchéité dynamique (32), qui est pourvue d'une surface d'étanchéité externe légèrement convexe (321) et qui est adaptée pour coopérer avec ladite surface interne cylindrique (14) de chaque boîtier (1) disponible et dépasse de ladite partie d'étanchéité fixe (31) au moins approximativement dans la direction radiale vers l'extérieur,
**caractérisé en ce que**
ledit joint (3) est pourvu d'une partie faible (33) sous la forme d'un évidement, qui est agencée sur la partie d'extrémité (310'), située à proximité de la partie d'étanchéité dynamique (32), de la partie d'étanchéité fixe (31) et séparément de la partie d'étanchéité dynamique (32), ladite partie faible (33) s'étendant circonférentiellement par rapport au joint (3) et axialement par rapport à la partie d'étanchéité fixe (31) et étant ouverte en direction de la partie d'étanchéité dynamique (32),
et **en ce que** ladite partie d'étanchéité fixe (31) du joint (3) est protégée contre un déplacement dans une direction ou une autre le long de l'axe optique (20) du réflecteur (2).

2. Phare de véhicule à moteur selon la revendication 1, **caractérisé en ce qu'**une nervure circonférentielle dépassant radialement vers l'extérieur (25) est disponible sur le logement (22) du réflecteur (2) et **en ce que** le joint (3) est pourvu d'une rainure circonférentielle (34), qui est située sur la surface d'étanchéité interne (311) de la partie d'étanchéité fixe (31), à savoir sur cette partie d'extrémité (310") de la partie d'étanchéité fixe (31), qui est située à une plus grande distance par rapport à la partie d'étanchéité dynamique (32), ladite rainure (34) étant adaptée pour coopérer avec ladite nervure circonférentielle (25) sur le réflecteur (2).

3. Phare de véhicule à moteur selon la revendication 2, **caractérisé en ce que** la partie d'étanchéité fixe (31) comprend une nervure circonférentielle dépassant radialement vers l'intérieur (312), qui est agencée sur la partie d'extrémité (310") située à une plus grande distance par rapport à la partie d'étanchéité dynamique (32) et de manière adjacente à la rainure (32) sur la surface d'étanchéité interne (311).

4. Phare de véhicule à moteur selon l'une quelconque des revendications précédentes, **caractérisé en ce que** l'épaisseur de la partie d'étanchéité dynamique (32) diminue proportionnellement avec la distance par rapport à la partie d'étanchéité fixe (31) du joint (3).

5. Joint de phare de véhicule à moteur (3), à savoir un joint à manchon adapté pour combler un interstice entre un boîtier (1) et un réflecteur (2) dans chaque phare de véhicule à moteur, à savoir un interstice entre au moins une surface d'étanchéité externe approximativement cylindrique (23) d'un réflecteur (2) lorsqu'on l'insère dans ledit boîtier (1) avec la possibilité d'ajuster sa position par rapport audit boîtier (1), et une surface d'étanchéité interne cylindrique (14) de chaque boîtier (1) disponible, ledit joint (3) étant conçu de manière uniforme et se composant de caoutchouc ou d'un matériau souple similaire à base de polymères et comprenant au moins une partie d'étanchéité fixe approximativement tubulaire (31), qui est adaptée pour coopérer avec ladite surface d'étanchéité externe (23) du réflecteur (2), ainsi qu'une partie d'étanchéité dynamique (32), qui est pourvue d'une surface d'étanchéité externe légèrement convexe (321) et qui est adaptée pour coopérer avec ladite surface interne cylindrique (14) de chaque boîtier (1) disponible et dépasse de ladite partie d'étanchéité fixe (31) au moins approximativement dans la direction radiale vers l'extérieur,
**caractérisé en ce que**
ledit joint (3) est pourvu d'une partie faible (33) sous la forme d'un évidement, qui est agencée sur la partie d'extrémité (310'), située à proximité de la partie d'étanchéité dynamique (32), de la partie d'étanchéité fixe (31) et séparément de la partie d'étanchéité dynamique (32), ladite partie faible (33) s'étendant circonférentiellement par rapport au joint (3) et axialement par rapport à la partie d'étanchéité fixe (31) et étant ouverte en direction de la partie d'étanchéité dynamique (32),
et **en ce que** ledit joint (3) est en outre pourvu d'une rainure circonférentielle (34), qui est prévue pour protéger le joint (3) contre un déplacement dans les deux directions le long du réflecteur (2) et qui est située sur la surface d'étanchéité interne (311) de la partie d'étanchéité fixe (31), à savoir sur cette partie d'extrémité (310") de la partie d'étanchéité fixe (31), qui est située à une plus grande distance par rapport à la partie d'étanchéité dynamique (32), ladite rainure (34) étant adaptée pour coopérer avec ladite nervure circonférentielle (25) sur le réflecteur (2).

6. Joint de phare de véhicule à moteur selon la revendication 5, **caractérisé en ce que** ladite partie d'étanchéité fixe (31) comprend une nervure circonférentielle dépassant radialement vers l'intérieur (312), qui est agencée sur la partie d'extrémité (310") située à une plus grande distance par rapport à la partie d'étanchéité dynamique (32) et de manière adjacente à la rainure (34) sur la surface d'étanchéité interne (311).

7. Joint de phare de véhicule à moteur selon la revendication 5 ou 6, **caractérisé en ce que** l'épaisseur de la partie d'étanchéité dynamique (32) diminue proportionnellement avec la distance par rapport à la partie d'étanchéité fixe (31) du joint (3).
